# EUROPEAN PATENT SPECIFICATION

(11) **EP 2 422 123 B1**
(45) Date of publication and mention of the grant of the patent: **13.02.2013**
(21) Application number: 10723286.0
(22) Date of filing: 21.04.2010
(51) Int. Cl.: F16K 31/06

(54) **ELECTRO-HYDRAULIC POPPET VALVE WITH SUPPLY PRESSURE UNLOADING FUNCTION**
ELEKTRO-HYDRAULISCHES TELLERVENTIL MIT VERSORGUNGSDRUCKENTLASTUNGSFUNKTION
SOUPAPE CHAMPIGNON ÉLECTRO-HYDRAULIQUE À FONCTION DE DÉCHARGE DE PRESSION D'ALIMENTATION

(30) Priority: 22.04.2009 US 428004
(43) Date of publication of application: 29.02.2012
(73) Proprietor: Eaton Corporation, Cleveland, Ohio 44114-2584 (US)
(72) Inventor: AMBROSE, Steven, Lee, Farmington Hills MI 48335 (US)
(74) Representative: Rüger, Barthelt & Abel
(86) International application number: PCT/IB2010/000899
(87) International publication number: WO 2010/122408

(56) References cited:
- EP-A1- 0 762 025
- WO-A1-92/14085
- US-A- 5 975 654
- US-A1- 2005 284 524
- US-B1- 6 276 764

## Description

### TECHNICAL FIELD

The present invention relates generally to electro-hydraulic solenoid valves, and in particular to a solenoid valve having one or more internal poppet-style valve devices.

### BACKGROUND OF THE INVENTION

A solenoid control valve configured for use within an electro-hydraulic fluid control system or fluid circuit can be used to selectively control a flow of oil or other fluid under pressure. Poppet valve assemblies (PVAs) include a cylindrical internal chamber and a tapered or shaped poppet device such as an armature, a ball, or another suitable device. Fluid under pressure is admitted into a valve body portion of the PVA in response to an energizing of a solenoid portion of the PVA. The application of hydraulic and/or magnetic force moves or actuates the poppet device, or multiple poppet or other valve devices, within the internal chamber. Fluid paths therewithin are thus selectively opened to permit fluid flow through various passages of the valve body in order to feed various downstream fluid circuit loads.

Within a PVA, fluid sealing integrity largely depends on the closeness and quality of the mating surfaces of the poppet and valve seat. As a result, some fluid leakage or bypass is ordinarily encountered. Depending on the particular configuration of the poppet device and downstream fluid circuit control system, fluid leakage can vary from somewhat minimal to relatively substantial. The leakage performance of conventional poppet valves and associated control fluid circuitry therefore can be less than optimal. In some hydraulic systems, it would be desirable to unload the supply pressure from a PVA in order to accurately quantify the leakage of the PVA and downstream fluid circuit. In such systems, it is also desirable to minimize the parasitic fluid losses and the cost to implement it. The present invention serves to fulfill these needs.
US 6 276 764 B1 discloses a valve assembly comprising: a valve body defining a supply port in fluid communication with a fluid supply, a first chamber connected to an inlet passage, a second chamber connected to an outlet passage and in fluid communication with the first chamber, a first valve seat, and a control port in fluid communication with at least one fluid component; an armature positioned at least partially in the first chamber and configured to seal against the first valve seat when the valve assembly is closed, and to move away from the first valve seat to allow fluid to pass to the control port when the valve assembly is open; and a valve device in the form of a piston positioned in the second chamber, wherein the piston is configured to move up and down depending on the pressure difference between the first and second chambers to substantially close and open the passage between the first and second chambers, and has a variable orifice for providing a restricted fluid communication between the first and second chambers when the piston is in its upper, closing position.

### SUMMARY OF THE INVENTION

A valve assembly according to one embodiment of the invention, as claimed in independent claim 1, has a solenoid portion with an energizable coil and a valve body connected thereto. The valve body contains a valve device having an armature positioned adjacent to the coil and a lower valve that is axially-aligned with the armature. The armature and its valve seat may be collectively referred to as the "upper valve" to denote its downstream position relative to the lower valve. The armature is biased by a resilient member, such as a spring or another suitable return device, and extends axially within a chamber of the valve body toward the lower valve. The lower valve may be configured as a spool valve in one embodiment and a ball poppet in another embodiment, although other suitable valve devices can also be used without departing from the intended scope of the invention.

The solenoid coil can be selectively energized using an energy supply such as a battery, an electrical outlet, or any other available energy supply to move the armature from a first position to a second position, thereby admitting fluid into the valve body via a supply port. Movement of the armature allows the fluid to pass between the lower valve and a lower valve seat and then between the armature and an upper valve seat. The fluid is ultimately discharged from the valve body via a control port where it is delivered to a downstream fluid circuit, e.g., a hydraulic machine and/or process, an automotive system, and/or other hydraulic component or device.

When the valve assembly is closed, which can occur when the coil is in either a de-energized or an energized state as desired, the armature is biased to seal against the upper valve seat. An end of the armature contacting a surface of the lower valve moves the lower valve to at least partially open one or more orifices in the valve body. The orifice vents fluid from the valve assembly, for example to a low-pressure tank or sump external to the valve body, and thus provides a pressure unloading function downstream of the supply port as described herein. Fluid bypass or leakage past the upper valve seat and into the downstream control circuit is thus substantially minimized. Thus, fluid leakage or pressure decay downstream of the valve assembly can be more precisely detected while parasitic losses in the energized state are sufficiently minimized..

The above features and advantages and other features and advantages of the present invention are readily apparent from the following detailed description of the best modes for carrying out the invention when taken in connection with the accompanying drawings.

### BRIEF DESCRIPTION OF THE DRAWINGS

FIG. 1 is a schematic illustration of a fluid circuit having a valve assembly in accordance with the invention;

FIG. 2 is a schematic cross-sectional illustration of a valve assembly usable within the fluid circuit of FIG. 1 and having a pair of internal valves each in a closed position;

FIG. 3 is a schematic cross-sectional illustration of the valve assembly of FIG. 2 in an open position;

FIG. 4 is a schematic cross-sectional illustration of a valve body portion of an alternate valve assembly in a closed position; and

FIG. 5 is a schematic cross-sectional illustration of the valve body portion of the alternate valve assembly of FIG. 4 in an open position.

### DESCRIPTION OF THE PREFERRED EMBODIMENTS

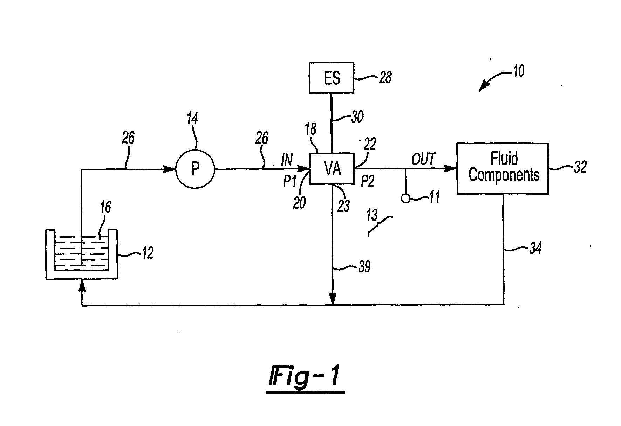

Referring to FIG. 1, a fluid circuit 10 includes a low-pressure tank, reservoir, or fluid sump 12 and a pump (P) 14. The sump 12 contains fluid 16, which is drawn by the pump 14 and delivered under pressure (P1) via a supply line 26 to a solenoid-operated valve assembly (VA) 18. The valve assembly 18 is electrically connected to an energy source 28, also labeled ES in FIG. 1, e.g., a battery, a capacitor, or other suitable electrical or electro-chemical storage device, or an electrical outlet, via a wireless or hard-wired electrical connection 30.

Control logic (not shown) can be implemented to selectively open and close the valve assembly 18 as needed to power a set of fluid components 32, such as but not limited to hydraulic machinery, valves, pistons, accumulators, or other fluid circuit devices. The fluid components 32 in turn are in fluid communication with the sump 12 via a return line 34. A pressure transducer 11 can be positioned downstream of the valve assembly 18 to sense pressure decay in a downstream circuit portion 13 of the fluid circuit 10.

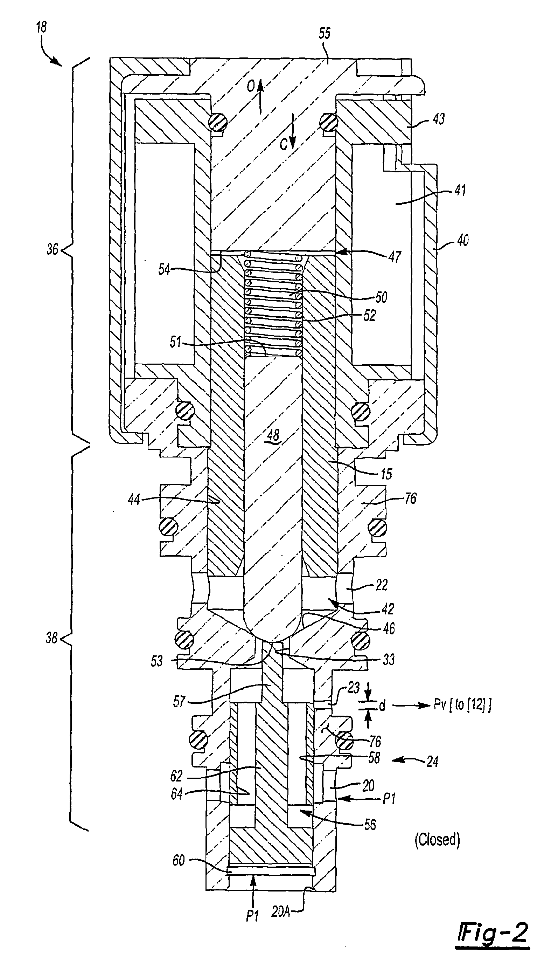

The fluid 16 is admitted into the valve assembly 18 via the supply line 26 at the supply pressure (P1) through a supply port 20. When the valve assembly 18 is turned on, which in a normally-closed device occurs when the valve assembly 18 is selectively energized, the fluid 16 admitted into the valve assembly 18 is ultimately discharged from the valve assembly 18 via a control port 22 at a control pressure (P2). At least one orifice 23 is in fluid communication with the sump 12 via another return line 39 to provide a pressure unloading feature as set forth below with reference to FIGS. 2 - 5. While a single orifice is shown in the various Figures for simplicity, additional orifices 23 can also be used within the scope of the invention. The number of orifices 23 used may be determined by the amount of available valve stroke, orifice size, and leakage past a lower valve 24 in the open and closed positions as explained below.

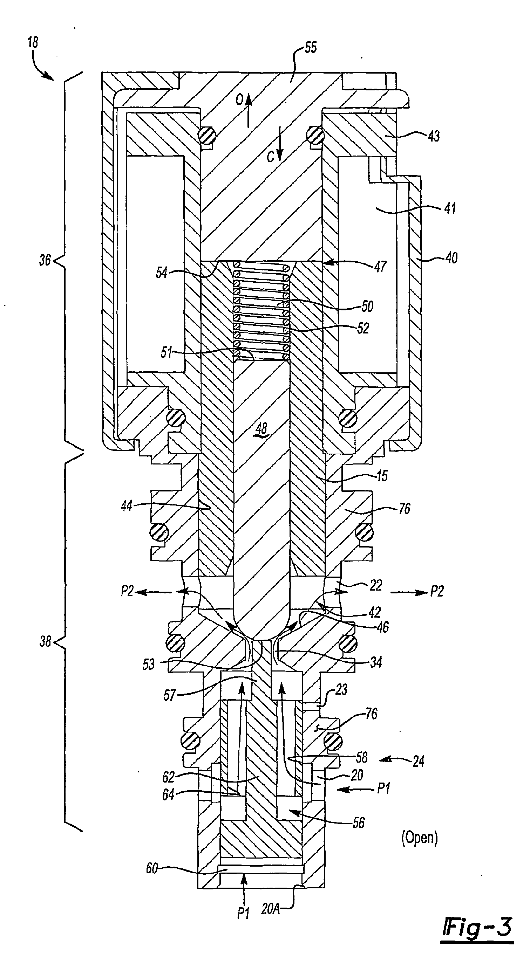

Referring to FIG. 2, the valve assembly 18 is shown in a closed position, blocking passage of a pressure (P1) to the control port 22. The valve assembly 18 includes a solenoid portion 36 and a valve body 38. The solenoid portion 36 is electrically connected to the energy source 28 of FIG. 1, as shown in that Figure. In this embodiment, when the solenoid portion 36 is de-energized in a normally-closed configuration, fluid 16 is blocked from reaching the control port 22. That is, fluid 16 is prevented from being discharged from the valve body 38 via the control port 22, which can be disposed in a wall 76 thereof. In this manner, the control pressure (P2) (see FIG. 3) at the control port 22 is not made available for use by the components 32 shown in FIG. 1.

The valve assembly 18 can be configured as an electro-hydraulic device, and may include a solenoid housing 40 that contains a solenoid winding or coil 41. The coil 41 is wound on a bobbin 43, and can be selectively energized to actuate or power the valve assembly 18. That is, when the coil 41 is de-energized, the valve assembly 18 restricts fluid communication between the supply port 20 and the control port 22. When the coil 41 is energized, a magnetic field is induced, thus generating magnetic flux which ultimately opens the valve assembly 18 to allow flow from the supply port 20 to the control port 22 as shown in FIG. 3 and described below.

In addition to the control port 22, the valve body 38 includes an inner wall 44 defining an upper chamber 42 that defines an upper valve seat 46. An armature 48 moves axially within the upper chamber 42 in the direction of arrow C absent a magnetic field as described above. A resilient member 50 such as a spring or other suitable return device can be positioned between a first end 51 of the armature 48 and an undersurface 54 of a pole portion 55 to react against the undersurface 54, and to thereby provide a sufficient return force for moving the armature 48 in the direction of arrow C when the solenoid portion 36 is de-energized as shown in FIG. 2.

The armature 48 is disposed in a magnetic sleeve 15 to move in conjunction therewith. In one embodiment, the magnetic sleeve 15 may circumscribe the armature 48. The sleeve 15 is moveably disposed within the upper chamber 42 of the valve body 38 and defines an air gap 47 with the undersurface 54 of the pole portion 55. A second end 53 of the armature 48 is configured to seal against the upper valve seat 46 with a predetermined maximum rate of fluid bypass. The armature 48 extends axially toward a lower chamber 56 of the valve body 38 and contacts a lower valve 24 through a connecting port 33, with the connecting port 33 providing fluid communication between the upper and lower chambers 42 and 56, respectively.

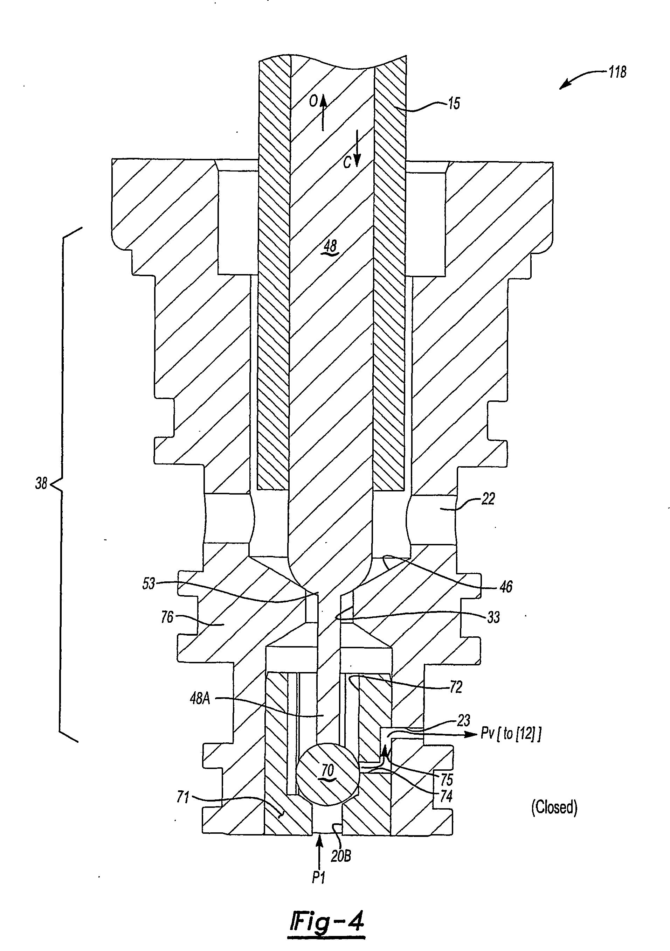

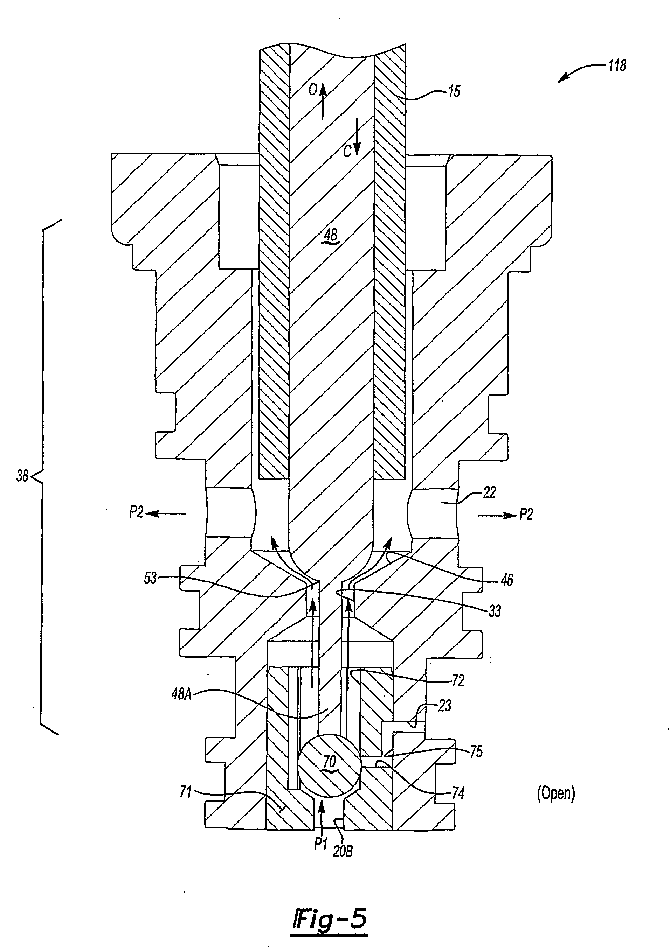

Still referring to FIG. 2, the volume of the lower chamber 56 is defined by an inner wall 58, which contains or houses the lower valve 24. As shown in the embodiment of FIGS. 2 and 3, the lower valve 24 can be configured as a spool valve. However, other embodiments are possible without departing from the intended scope of the invention, including but not limited to the ball poppet of FIGS. 4 and 5 described below.

The valve body 38 also defines the supply force balance port 20A, within which is disposed a stop device 60, e.g., an annular snap ring or other suitable spool-retaining device. When the energy source 28 of FIG. 1 energizes the coil 41, the sleeve 15 is magnetically attracted toward the pole portion 55, and thus the armature 48 moves axially in the direction of arrow O within the upper chamber 42. As a result, the force of the resilient member 50 is overcome and the resilient member 50 compresses against the undersurface 54 (see FIG..3). As the armature 48 moves in the direction of arrow O, the lower valve 24 is also free to move in the direction of arrow O in response to fluid pressure at the supply force balance port 20A.

When the lower valve 24 is configured as a spool valve as shown in the embodiment of FIGS. 2 and 3, the lower valve can include a spool 62 defining axial fluid passages 64 therein. The spool 62 includes an extension 57 which contacts the armature 48, such that motion of the armature 48 can move the spool 62. When the valve assembly 18 is in an open position as described below, the fluid 16 providing pressure (P1) at the supply port 20, 20A can flow through the axial fluid passages 64, through the connecting port 33, and into the upper chamber 42, where it is ultimately discharged through the control port 22 to provide the control pressure P2. Fluid flow is thus provided with minimal pressure drop across the valve assembly 18, which is preferably less than approximately 0.5 bar(g).

At least one orifice 23 is disposed in the valve body 38 between the lower valve 24 and the armature 48. As noted above, multiple orifices 23 can be used, or just one as shown, depending on a variety of factors. The factors can include, but are not necessarily limited to, available valve stroke, orifice size, allowable leakage past the lower valve 24, etc. For example, one embodiment may include multiple orifices 23 that are approximately equally spaced, e.g., four orifices 23 positioned 90 degrees apart from each adjacent orifice 23. The orifices 23 can be sized as needed for a particular application, e.g., approximately 0.5mm to approximately 1mm in diameter according to another embodiment. In some applications, proper venting may not be achievable using a single orifice 23. Also, leakage past the lower valve 24 can be difficult to predict. Therefore, multiple orifices 23 may provided, with some of the orifices 23 plugged as needed to tune the valve assembly 18 for a particular application.

More particularly, the orifice 23 may be formed within the wall 76 of the valve body 38. The rate of fluid flow between the lower chamber 56 and the sump 12 (see FIG. 1) is thus limited by the orifice 23. In the open position shown in FIG. 3, the orifice 23 is restricted by spool 62 and limits a flow of fluid 16, thereby reducing parasitic fluid loss. The orifice 23 also reduces any appreciable pressure build up due to any fluid leakage occurring past the lower valve 24 in the closed position of FIG. 2.

When the valve assembly 18 is in the closed position shown in FIG. 2, the orifice 23 allows for venting of the valve assembly 18 by dumping fluid that leaks past the spool 62. According to one embodiment, the upper valve seat 46 and the armature 48 are manufactured to have less than approximately 100 mg/min of fluid leakage or bypass when in the closed position. Fluid leakage past the lower valve 24 in the closed position can be several orders of magnitude higher and still provide an acceptable pressure unloading function. The orifice 23 is configured with a diameter (d) that provides optimal pressure unloading. In one embodiment, the diameter (d) of the orifice 23 is approximately 0.5mm to approximately 1 mm. However, other diameter sizes can also be used without departing from the intended scope of the invention.

As noted above, the orifice 23 should be large enough to reduce any appreciable pressure buildup due to fluid leakage past the spool 62 in the closed position. The orifice 23 is also sized small enough to reduce parasitic fluid loss to the sump 12 when the armature 48 and the lower valve 24 are in the open position shown in FIG. 3. The diameter (d) should also be sized to sufficiently minimize any pressure drop across the valve assembly 18 when in the open position shown in FIG. 3.

Referring to FIG. 3, the valve assembly 18 in the illustrated embodiment is open when the solenoid coil 41 is energized, thus allowing the fluid 16 to flow from the port 20 to the control port 22. When a magnetic field is generated, the biasing force of the resilient member 50 is overcome by fluid pressure to causes the armature 48 to move in the direction of arrow O. As the armature 48 moves in the direction of arrow O the second end 53 thereof moves away from the extension 57. No longer opposed by the armature 48, the lower valve 24 is free to move in the direction of arrow O to allow fluid to flow from the port 20 to the control port 22, and to substantially block the orifice 23, i.e., with at least approximately 75% of the orifice 23 being blocked in one embodiment.

FIGS. 4 and 5 illustrate another valve assembly 118 where the lower valve 24 is configured as a ball poppet. For simplicity, the solenoid portion 36 of FIGS. 2 and 3 is omitted from FIGS. 4 and 5, with the electro-mechanical structure and operation of the solenoid portion 36 described above applying equally to the embodiment of FIGS. 4 and 5. The ball poppet could be used, for example, as a lower-cost device relative to the spool design of FIGS. 2 and 3. However, a ball poppet may be expected to leak at a higher rate relative to the spool design, and therefore a performance vs. efficiency tradeoff may be a consideration in deciding between the particular embodiment to employ in a given fluid circuit.

In the embodiment of FIG. 4, a sphere or ball 70 is biased towards a closed position by the armature 48, for example via an axial arm or armature pin 48A, which can be coupled to the armature 48 described above. A lower valve seat 71 is shaped to form a fluid seal with respect to the ball 70 when the armature pin 48A pushes the ball 70 against or near the lower valve seat 71 as shown in FIG. 4.

The lower valve seat 71 can be made of a suitable material to define a plurality of axial grooves 72 and a radial orifice 74. The ungrooved portions of the lower valve seat 71 contain the ball 70 within an axial path while the grooves 72 allow fluid to be directed past the ball 70. The radial orifice 74 is in fluid communication with the orifice 23 via an annular channel 75 formed in and/or between the lower valve seat 71 and the wall 76 of the valve body 38. In this embodiment, fluid pressure (P1) acting on the ball 70 at control port 20B exceeds or overcomes the return force of the resilient member 50 (see FIGS. 2 and 3). However, some amount of fluid leakage may be present with respect to the ball 70.

Fluid 16 that bypasses the ball 70 is therefore directed through the axial grooves 72, the radial orifice 74, and the annular channel 75, where it is ultimately vented to the sump 12 via the orifice 23 to limit pressure acting on the armature 48. By venting fluid 16 from the valve assembly 18 when the valve assembly 18, 118 is closed, accurate measurement of pressure decay due to fluid leakage is enabled in a downstream fluid circuit, such as the fluid circuit 13 of FIG. 1. The pressure transducer 11 shown in FIG. 1 can be used to perform the required pressure measurements. That is, absent such venting using the orifice 23, measurement accuracy of fluid leakage past the armature 48 and the upper valve seat 46 could be impaired depending upon the severity of the leak.

Referring to FIG. 5, when the valve assembly 118 is energized in a normally-closed configuration, the ball 70 is no longer biased in the direction of arrow C by the armature pin 48A. Fluid pressure (P1) can than move the ball 70 within the axial grooves 72. The ball 70 should move only so far as to substantially block the radial orifice 74, thus minimizing fluid flow into the orifice 23. In this manner, parasitic losses are minimized when the valve assembly 118 is in an energized or open position as shown in FIG. 5.

As will be understood by those of ordinary skill in the art, solenoid-actuated valves such as the valve assemblies 18 and 118 described hereinabove can be configured either as normally open or normally closed devices. A normally-open device would fail, in the event of a power failure, in an open position, closing only when energized. A normally closed device would do precisely the opposite, i.e., failing in a closed position, requiring energizing current to actuate the device. While the valve assembly 18 and 118 are each described hereinabove as being normally-closed devices, either embodiment could be modified as normally open devices without departing from the intended scope of the invention.

While the best modes for carrying out the invention have been described in detail, those familiar with the art to which this invention relates will recognize various alternative designs and embodiments for practicing the invention within the scope of the appended claims.

## Claims

1. A valve assembly (18) comprising:
a valve body (38) defining a supply port (20) in fluid communication with a fluid supply (12), a first chamber (42), a second chamber (56) in fluid communication with the first chamber (42), a first valve seat (46), and a control port (22) in fluid communication with at least one fluid component (32);
an armature (48) positioned at least partially in the first chamber (42), wherein the armature (48) is configured to seal against the first valve seat (46) when the valve assembly (18) is closed, and to move away from the first valve seat (46) to allow fluid (16) to pass to the control port (22) when the valve assembly (18) is open; and
a valve device (24) positioned in the second chamber (56),
**characterised in that** the valve device (24) has a moveable portion (62, 70) positioned adjacent to the supply port (20) to selectively admit fluid (16) into the second chamber (56) and past the first valve seat (46) when the valve assembly (18) is open;
wherein the valve body (38) further defines at least one orifice (23) between the supply port (20) and the first valve seat (46), the orifice (23) providing a pressure unloading function for venting fluid (16) that leaks past the valve device (24) when the valve assembly (18) is closed.

2. The valve assembly (18) of claim 1, further comprising a resilient member (50) positioned to bias the armature (48) against the first valve seat (46) when the valve assembly (18) is closed.

3. The valve assembly (18) of claim 1, wherein the moveable portion (62, 70) is one of a ball (70) and a spool (62).

4. The valve assembly (18) of claim 3, wherein the moveable portion (62, 70) is the ball (70), the valve assembly (18) further comprising a second valve seat (71) within the second chamber (56), wherein the armature (48) includes an axial extension (48A) having a free end that selectively moves the ball (70) into contact with the second valve seat (71) when the valve assembly (18) is closed.

5. The valve assembly (18) of claim 4, wherein the first valve seat (46) is fixed with respect to the valve body (38), and wherein the second valve seat (71) is moveable with respect to the valve body (38).

6. The valve assembly (18) of claim 1, wherein the valve device (24) is configured to substantially block the orifice (23) when the valve assembly (18) is open.

7. The valve assembly (18) of claim 5, wherein the valve device (24) blocks at least approximately 75% of a diameter of the orifice (23) when the valve assembly (18) is open.

8. The valve assembly (18) of claim 1, wherein:
moving the armature (48) away from the valve seat (46) frees the valve device (24) to allow fluid (16) to enter the second chamber (56) through the supply port (20).

9. The valve assembly (18) of claim 1, wherein actuating the armature (48) to place the valve assembly (18) in the closed position opens the orifice (23).

10. The valve assembly (18) of claim 1, wherein the first valve seat (46) defines a connecting port (33) between the first chamber (42) and the second chamber (56), and wherein the armature (48) extends axially through the connecting port (33) to contact and move the valve device (24).

11. The valve assembly (18) of claim 1, wherein:
the armature (48) is adapted for biasing the valve device (24) in a first direction to minimize fluid entry through the supply port (20) when the valve assembly (18) is closed.

12. The valve assembly (18) of claim 1, further comprising
a magnetic sleeve (15) disposed within the valve body (38);
a solenoid coil (41) that can be energized to generate a magnetic field sufficient for moving the magnetic sleeve (15) and armature (48) into one of an open and a closed position; and
a resilient member (50) that biases the armature (48) against the first valve seat (46) when the valve assembly (18) is closed; and
wherein the armature (48) is circumscribed by the magnetic sleeve (15) and is adapted to move in conjunction with the magnetic sleeve (15).

13. The valve assembly (18) of claim 1, wherein the valve device (24) is a spool valve (62) and is configured to substantially block the orifice (23) when the valve assembly (18) is open.

14. The valve assembly (18) of claim 4, wherein the second valve seat (71) defines a plurality of axial grooves (72) for retaining a ball portion (70) of the ball poppet in an axial path when the valve assembly (18) is open.

15. The valve assembly (18) of claim 14, wherein the valve seat (71) defines a radial channel (74) forming a fluid path between the axial grooves (72) and the orifice (23) when the valve assembly (18) is closed.

## Patentansprüche

1. Ventilanordnung (18), die aufweist:
einen Ventilkörper (38), der einen Versorgungsanschluss (20) in Fluidverbindung mit einer Fluidversorgung (12), eine erste Kammer (42), eine zweite Kammer (56) in Fluidverbindung mit der ersten Kammer (42), einen ersten Ventilsitz (46) und einen Steueranschluss (22) in Fluidverbindung mit wenigstens einer Fluidkomponente (32) definiert;
einen Anker (48), der wenigstens teilweise in der ersten Kammer (42) positioniert ist, wobei der Anker (48) konfiguriert ist, um gegen den ersten Ventilsitz (46) abzudichten, wenn die Ventilanordnung (18) geschlossen ist, und um sich von dem ersten Ventilsitz (46) weg zu bewegen, um einem Fluid (16) zu ermöglichen, zu dem Steueranschluss (22) zu strömen, wenn die Ventilanordnung (18) geöffnet ist; und
eine Ventilvorrichtung (24), die in der zweiten Kammer (56) positioniert ist,
**dadurch gekennzeichnet, dass** die Ventilvorrichtung (24) einen bewegbaren Teil (62, 70) aufweist, der benachbart zu dem Versorgungsanschluss (20) positioniert ist, um wahlweise das Fluid (16) in die zweite Kammer (56) hinein und an dem ersten Ventilsitz (46) vorbei strömen zu lassen, wenn die Ventilanordnung (18) geöffnet ist;
wobei der Ventilkörper (38) ferner wenigstens eine öffnung (23) zwischen dem Versorgungsanschluss (20) und dem ersten Ventilsitz (46) definiert, wobei die Öffnung (23) eine Druckentladefunktion zur Ableitung eines Fluids (16) bereitstellt, das an der Ventilvorrichtung (24) durchsickert, wenn die Ventilanordnung (18) geschlossen ist.

2. Ventilanordnung (18) nach Anspruch 1, die ferner ein nachgiebiges Element (50) aufweist, das positioniert ist, um den Anker (48) gegen den ersten Ventilsitz (46) vorzuspannen, wenn die Ventilanordnung (18) geschlossen ist.

3. Ventilanordnung (18) nach Anspruch 1, wobei der bewegbare Teil (62, 70) entweder eine Kugel (70) oder einer Schieber (62) ist.

4. Ventilanordnung (18) nach Anspruch 3, wobei der bewegbare Teil (62, 70) die Kugel (70) ist, wobei die Ventilanordnung (18) ferner einen zweiten Ventilsitz (71) innerhalb der zweiten Kammer (56) aufweist, wobei der Anker (48) einen axialen Fortsatz (48A) mit einem freien Ende aufweist, das die Kugel (70) wahlweise in Kontakt mit dem zweiten Ventilsitz (71) bringt, wenn die ventilanordnung (18) geschlossen wird.

5. Ventilanordnung (18) nach Anspruch 4, wobei der erste Ventilsitz (46) in Bezug auf den Ventilkörper (38) ortsfest fixiert ist und wobei der zweite Ventilsitz (71) in Bezug auf den Ventilkörper (38) bewegbar ist

6. Ventilanordnung (18) nach Anspruch 1, wobei die ventilvorrichtung (24) konfiguriert ist, um die Öffnung (23) im wesentlichen zu versperren, wenn die Ventilanordnung (18) geöffnet ist.

7. Ventilanordnung (18) nach Anspruch 5, wobei die Ventilvorrichtung (24) wenigstens ungefähr 75% eines Durchmessers der Öffnung (23) versperrt, wenn die Ventilanordnung (18) geöffnet ist.

8. Ventilanordnung (18) nach Anspruch 1, wobei:
eine Bewegung des Ankers (48) von dem Ventilsitz (46) weg die Ventilvorrichtung (24) freigibt, um einem Fluid (16) zu ermöglichen, durch den Versorgungsanschluss (20) in die zweite Kammer (56) einzutreten.

9. Ventilanordnung (18) nach Anspruch 1, wobei eine Betätigung des Ankers (48), um die Ventilanordnung (18) in der geschlossenen Stellung zu positionieren, die Öffnung (23) öffnet.

10. Ventilanordnung (18) nach Anspruch 1, wobei der erste Ventilsitz (46) einen Verbindungskanal (33) zwischen der ersten Kammer (42) und der zweiten Kammer (56) definiert und wobei der Anker (48) sich in Axialrichtung durch den Verbindungskanal (33) hindurch erstreckt, um die Ventilvorrichtung (24) zu berühren und zu bewegen.

11. Ventilanordnung (18) nach Anspruch 1, wobei:
der Anker (48) eingerichtet ist, um die Ventilvorrichtung (24) in eine erste Richtung vorzuspannen, um den Fluideintritt durch den Versorgungsanschluss (20) hindurch zu minimieren, wenn die Ventilanordnung (18) geschlossen ist.

12. Ventilanordnung (18) nach Anspruch 1, die ferner aufweist:
eine magnetische Hülse (15), die innerhalb des Ventilkörpers (38) angeordnet ist;
eine Solenoidspule (41), die erregt werden kann, um ein Magnetfeld zu erzeugen, das ausreicht, um die magnetische Hülse (15) und den Anker (48) entweder in eine offene oder in eine geschlossene Stellung zu überführen; und
ein nachgiebiges Element (50), das den Anker (48) gegen den ersten Ventilsitz (46) vorspannt, wenn die Ventilanordnung (18) geschlossen ist; und
wobei der Anker (48) von der magnetischen Hülse umgeben und eingerichtet ist, um sich zusammen mit der magnetischen Hülse (15) zu bewegen.

13. Ventilanordnung (18) nach Anspruch 1, wobei die Ventilvorrichtung (24) ein Schieberventil (62) ist und konfiguriert ist, um die Öffnung (23) im Wesentlichen zu versperren, wenn die Ventilanordnung (18) geöffnet ist.

14. Ventilanordnung (18) nach Anspruch 4, wobei der zweite Ventilsitz (71) mehrere axiale Nuten (72) zur Aufnahme eines Kugelteils (70) des Kugelventils in einem axialen Weg definiert, wenn die Ventilanordnung (18) geöffnet ist.

15. Ventilanordnung (18) nach Anspruch 14, wobei der Ventilsitz (71) einen radialen Kanal (74) definiert, der einen Fluidweg zwischen den axialen Nuten (72) und der Öffnung (23) bildet, wenn die Ventilanordnung (18) geschlossen ist.

## Revendications

1. Ensemble de distributeur (18) comprenant :
un corps de distributeur (38) définissant une lumière d'alimentation (20) en communication fluide avec une alimentation en fluide (12), une première chambre (42), une deuxième chambre (56) en communication fluide avec la première chambre (42), un premier siège de soupape (46) et un orifice de commande (22) en communication fluide avec au moins un composant de fluide (32) ;
une armature (48) positionnée au moins en partie dans la première chambre (42), l'armature (48) étant configurée pour réaliser une étanchéité contre le premier siège de soupape (46) quand l'ensemble de distributeur (18) est fermé, et pour s'éloigner du premier siège de soupape (46) afin de laisser du fluide (16) passer jusqu'à l'orifice de commande (22) quand l'ensemble de distributeur (18) est ouvert ; et
un dispositif distributeur (24) positionné dans la deuxième chambre (56), **caractérisé en ce que** le dispositif distributeur (24) a une partie mobile (62, 70) en position adjacente à la lumière d'alimentation (20) pour laisser entrer sélectivement du fluide (16) dans la deuxième chambre (56) et le faire passer par le premier siège de soupape (46) quand l'ensemble de distributeur (18) est ouvert ;
dans lequel le corps de distributeur (38) définit en outre au moins un orifice (23) entre la lumière d'alimentation (20) et le premier siège de soupape (46), l'orifice (23) fournissant une fonction de décharge de pression pour évacuer le fluide (16) qui fuit au niveau du dispositif distributeur (24) quand l'ensemble de distributeur (18) est fermé.

2. Ensemble de distributeur (18) selon la revendication 1, comprenant en outre un élément résilient (50) positionné de façon à pousser l'armature (48) contre le premier siège de soupape (46) quand l'ensemble de distributeur (18) est fermé.

3. Ensemble de distributeur (18) selon la revendication 1, dans lequel la partie mobile (62, 70) est soit une bille (70), soit un tiroir cylindrique (62).

4. Ensemble de distributeur (18) selon la revendication 3, dans lequel la partie mobile (62, 70) est la bille (70), l'ensemble de distributeur (18) comprenant en outre un deuxième siège de soupape (71) à l'intérieur de la deuxième chambre (56), dans lequel l'armature (48) comprend une extension axiale (48A) ayant une extrémité libre qui met sélectivement la bille (70) en contact avec le deuxième siège de soupape (71) quand l'ensemble de distributeur (18) est fermé.

5. Ensemble de distributeur (18) selon la revendication 4, dans lequel le premier siège de soupape (46) est fixe par rapport au corps de distributeur (38), et dans lequel le deuxième siège de soupape (71) est mobile par rapport au corps de distributeur (38).

6. Ensemble de distributeur (18) selon la revendication 1, dans lequel le dispositif distributeur (24) est configuré pour bloquer substantiellement l'orifice (23) quand l'ensemble de distributeur (18) est ouvert.

7. Ensemble de distributeur (18) selon la revendication 5, dans lequel le dispositif distributeur (24) bloque au moins environ 75 % d'un diamètre de l'orifice (23) quand l'ensemble de distributeur (18) est ouvert.

8. Ensemble de distributeur (18) selon la revendication 1, dans lequel :
le déplacement de l'armature (48) à l'écart du siège de soupape (46) libère le dispositif distributeur (24) pour laisser le fluide (16) entrer dans la deuxième chambre (56) par la lumière d'alimentation (20).

9. Ensemble de distributeur (18) selon la revendication 1, dans lequel l'actionnement de l'armature (48) pour mettre l'ensemble de distributeur (18) dans la position fermée ouvre l'orifice (23).

10. Ensemble de distributeur (18) selon la revendication 1, dans lequel le premier siège de soupape (46) définit une lumière de connexion (33) entre la première chambre (42) et la deuxième chambre (56), et dans lequel l'armature (48) s'étend axialement à travers la lumière de connexion (33) pour toucher et déplacer le dispositif distributeur (24).

11. Ensemble de distributeur (18) selon la revendication 1, dans lequel :
l'armature (48) est adaptée pour solliciter le dispositif distributeur (24) dans une première direction pour minimiser l'entrée de fluide par la lumière d'alimentation (20) quand l'ensemble de distributeur (18) est fermé.

12. Ensemble de distributeur (18) selon la revendication 1, comprenant en outre :
un manchon magnétique (15) placé à l'intérieur du corps de distributeur (38) ;
une bobine de solénoïde (41) qui peut être excitée pour générer un champ magnétique suffisant pour mettre le manchon magnétique (15) et l'armature (48) dans une position parmi une position ouverte et une position fermée ; et
un élément résilient (50) qui pousse l'armature (48) contre le premier siège de soupape (46) quand l'ensemble de distributeur (18) est fermé ; et
dans lequel l'armature (48) est circonscrite par le manchon magnétique (15) et est adaptée pour se déplacer en conjonction avec le manchon magnétique (15).

13. Ensemble de distributeur (18) selon la revendication 1, dans lequel le dispositif distributeur (24) est un distributeur à tiroir cylindrique (62) et est configuré pour bloquer substantiellement l'orifice (23) quand l'ensemble de distributeur (18) est ouvert.

14. Ensemble de distributeur (18) selon la revendication 4, dans lequel le deuxième siège de soupape (71) définit une pluralité de rainures axiales (72) destinées à retenir une partie bille (70) du clapet à bille dans un chemin axial quand l'ensemble de distributeur (18) est ouvert.

15. Ensemble de distributeur (18) selon la revendication 14, dans lequel le siège de soupape (71) définit un canal radial (74) formant un chemin à fluide entre les rainures axiales (72) et l'orifice (23) quand l'ensemble de distributeur (18) est fermé.
